(19) Europäisches Patentamt

European Patent Office

Office européen des brevets

(11) **EP 1 017 189 B1**

(12) **FASCICULE DE BREVET EUROPEEN**

(45) Date de publication et mention
de la délivrance du brevet:
**02.08.2006 Bulletin 2006/31**

(51) Int Cl.:
***H04B 7/216*** *(2006.01)*

(21) Numéro de dépôt: **99403261.3**

(22) Date de dépôt: **23.12.1999**

(54) **Satellite à couverture omnidirectionnelle**

Satellit mit rundstrahlender Antenne

Satellite with omnidirectional coverage

(84) Etats contractants désignés:
**AT BE CH CY DE DK ES FI FR GB GR IE IT LI LU
MC NL PT SE**

(30) Priorité: **31.12.1998 FR 9816713**

(43) Date de publication de la demande:
**05.07.2000 Bulletin 2000/27**

(73) Titulaire: **ALCATEL
75008 Paris (FR)**

(72) Inventeur: **Nasta, Rodolphe
31100 Toulouse (FR)**

(74) Mandataire: **Hedarchet, Stéphane et al
COMPAGNIE FINANCIERE ALCATEL
Département Propriété Industrielle
54, rue La Boétie
75008 Paris (FR)**

(56) Documents cités:
**EP-A- 0 639 009          WO-A-98/56123**

**Description**

La présente invention a pour objet un procédé de transmission de signaux vers un satellite présentant au moins deux antennes dont les diagrammes se superposent au moins partiellement; elle concerne aussi un procédé de transmission de signaux depuis un tel satellite, ou vers un tel satellite. Elle concerne aussi un satellite présentant au moins deux antennes dont les diagrammes se superposent au moins partiellement.

L'invention concerne les satellites, et plus précisément la liaison de télémesure, télécommande et mesure de distance entre les stations au sol et un satellite. Cette liaison est plus couramment appelée liaison TTC, acronyme de l'anglais Telemetry, Tracking and Command, en français télémétrie, poursuite et télécommande; ou liaison TCR, pour l'anglais Telemetry, Command et Ranging, en français télémétrie, télécommande et mesure de distance. Une telle liaison doit être établie de façon très fiable durant toutes les phases de la vie d'un satellite; on peut globalement distinguer quatre phases:

- une phase de mise à poste, qui correspond à la période depuis l'injection par le lanceur jusqu'au ralliement de la position définitive du satellite;
- une phase de maintien à poste, qui correspond à la phase d'opération nominale du satellite;
- une phase de secours, le cas échéant, qui correspond à une panne et pendant laquelle l'altitude du satellite peut être modifiée ; et
- une phase de désactivation ou déorbitation, au cours de laquelle le satellite est envoyé sur une orbite dite cimetière.

Pendant toutes ces phases, il est important que la liaison TTC soit conservée; il conviendrait pour cela d'assurer une couverture satellite, aussi large que possible, notamment pour les phases critiques de secours, de mise à poste et de déorbitation.

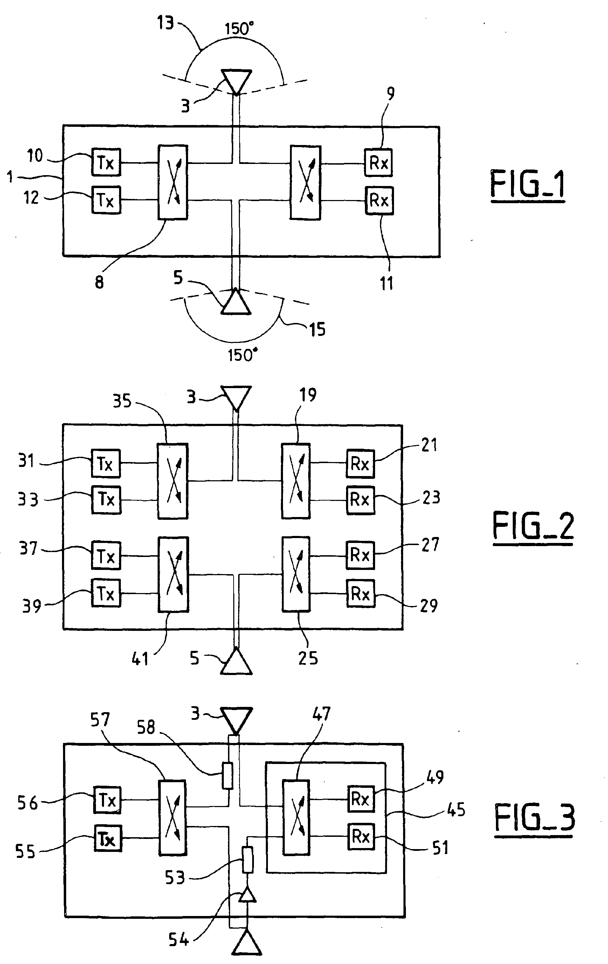

La figure 1 montre une représentation schématique d'un satellite connu; le satellite 1 comprend une antenne omnidirectionnelle 3 dite antenne terre, et une antenne omnidirectionnelle 5 située de l'autre côté du satellite, dite antenne anti-terre. Les deux antennes sont reliées à un coupleur 7, qui permet d'additionner les signaux des antennes, et qui transmet la somme des signaux à l'un ou l'autre de deux récepteurs Rx 9 et 11; on prévoit deux récepteurs en redondance chaude de sorte à permettre la poursuite du fonctionnement du satellite si l'un des récepteurs cesse de fonctionner. La sommation des signaux des deux antennes permet d'obtenir une couverture, sur les faces terre et anti-terre du satellite. Ce type de dispositif présente les inconvénients suivants. Dans la zone où les diagrammes des antennes se superposent, les signaux reçus par le satellite sur les antennes terre et anti-terre sont additionnés; il se produit alors un phénomène de trajets multiples, qui perturbe la réception du signal. Un problème symétrique se rencontre en télémesure, i. e. pour l'émission des signaux à partir du satellite: on dispose alors deux émetteurs Tx 10 et 12 en redondance froide, avec un coupleur 8; les signaux fournis par l'émetteur actif sont transmis aux antennes terre et anti-terre. Bien que ceci ne soit pas représenté sur la figure, les antennes peuvent être séparées en émission et en réception.

C'est pourquoi classiquement sur les plateformes, les couvertures garanties se limitent, pour chaque antenne, à un cône de visibilité, qui présente une taille typique de $\pm 75°$. Le cône de visibilité correspondant 13 et 15 des antennes 3 et 5, qui présente un angle au centre de 150°, est représenté schématiquement sur la figure 1. Ces valeurs sont données à titre d'exemple, mais en tout état de cause, les couvertures sont nécessairement limitées. En dehors de ce cône, i. e. dans la zone de recouvrement du diagramme des antennes, la couverture n'est pas garantie. Cette solution n'est pas satisfaisante dans la mesure où elle ne garantit pas une couverture pour des phases critiques telles que le secours ou la mise à poste.

Différentes solutions à ce problème ont été proposées. Des programmes ESA ou CNES proposent d'utiliser des polarisations circulaires croisées pour les antennes terre et anti-terre. Une polarisation, par exemple une polarisation circulaire droite, est dédiée à l'antenne terre, et la polarisation croisée, par exemple circulaire gauche est dédiée à l'antenne anti-terre. Le fonctionnement du satellite est analogue à celui décrit en référence à la figure 1 en dehors de la zone de recouvrement des diagrammes des antennes, à cela près que les stations au sol doivent émettre une onde dont la polarisation est fonction de la position du satellite. Dans la zone de recouvrement des antennes, pour une onde incidente en polarisation circulaire, l'isolation de polarisation limite l'incidence des trajets multiples sur la recombinaison des signaux provenant des deux antennes. Il est possible d'obtenir une couverture satisfaisante dans la zone de recouvrement des antennes, pour une isolation de polarisation de l'ordre de 10 dB. De nouveau, la solution est symétrique en télémesure.

Cette solution présente l'inconvénient de générer une faible perte dans le bilan de liaison; elle nécessite surtout de disposer d'une onde incidente circulaire, ce qui n'est pas le cas par exemple pour certaines stations en bande Ku, par exemple le réseau TELESAT en polarisation linéaire; en outre, il est difficile de connaître la position du satellite pour choisir la polarisation adéquate, notamment dans les modes de secours.

La figure 2 montre un autre satellite connu. Le satellite de la figure 2 est identique à celui de la figure 1, à cela près qu'il ne comprend pas un coupleur 7 et deux récepteurs 9 et 11 recevant les signaux des deux antennes, mais pour l'antenne terre 3 un coupleur 19 et deux récepteurs 21 et 23 en redondance chaude, et pour l'antenne anti-terre un coupleur 25 et deux récepteurs 27 et 29 en redondance chaude. On utilise en redondance chaude les récepteurs 21 et 23 d'une part, et 27 et 29 d'autre part, de sorte que le problème de sommation, et donc de multitrajet, entre les signaux reçus sur les antennes terre et anti-terre ne se pose pas. Il convient néanmoins de sélectionner ensuite le signal utilisé, qui peut être celui provenant de l'antenne terre comme celui provenant de l'antenne anti-terre.

Pour la télémesure, on utilise pour l'antenne terre deux émetteurs 31 et 33 à une première fréquence, avec un coupleur 35, et pour l'antenne anti-terre deux émetteurs 37 et 39 à une deuxième fréquence, avec un coupleur 41. Sur chaque voie, les deux émetteurs sont en redondance froide. L'émission à des fréquences différentes limite le problème des trajets multiples dans la zone de recouvrement des antennes terre et anti-terre.

Cette solution présente l'inconvénient de doubler le nombre de récepteurs; en outre, elle rend plus complexe la logique de sélection entre les antennes terre et anti-terre. En télémesure, on double aussi le nombre d'émetteurs; en outre, il est encore nécessaire de connaître la position du satellite pour choisir la fréquence adéquate.

US-A-3 761 813 décrit un système de transmission à satellite géostationnaire vers des avions. Dans ce document est évoqué le problème des trajets multiples du fait des réflexions sur le sol des signaux transmis par le satellite. La solution proposée est d'utiliser un multiplexage temporel des signaux destinés aux différents avions; la période du multiplex est choisie de sorte que les signaux réfléchis sur la surface de la terre ne parviennent pas à un avion en même temps que les signaux qui lui sont destinés. En outre, il est proposé d'utiliser des fréquences différentes sur les différents canaux du multiplex temporel.

US-A-5 450 448 décrit un système de positionnement par satellite, et propose une solution au problème des trajets multiples. Ce document propose un traitement à base de calcul des différences de signaux décalés dans le temps, pour réduire l'interférence due aux trajets multiples. Ce document mentionne d'autres solutions de l'art antérieur pour réduire l'interférence due aux trajets multiples.

WO 98/56123 décrit les caractéristiques des préambules des revendications indépendantes.

Par ailleurs, les techniques d'étalement de spectre sont connues en soi, et permettent de définir plusieurs canaux logiques sur un seul canal physique, correspondant à une fréquence porteuse et à une bande passante données. Les plus connues sont :

- l'étalement de spectre par séquence directe, en anglais Direct Sequence Spread Spectrum, qui inclut l'AMRC, ou accès multiple à répartition de code, en anglais CDMA ou Code Division Multiple Access;
- l'étalement de spectre par saut de fréquence, ou FH pour l'anglais Frequency Hopping, qui inclut aussi le CDMA;
- l'étalement de spectre par accès multiple à détection de porteuse, ou CSMA de l'anglais Carrier Sense Multiple Access.

On appelle dans les systèmes à étalement de spectre "bit" l'information binaire transmise sur un canal, et "bribe" ou en langue anglaise "chip" l'information binaire associée à la séquence pseudo-aléatoire.

Dans le cadre de l'accès multiple qu'autorisent les séquences à étalement de spectre, plusieurs utilisateurs peuvent communiquer simultanément sur des canaux logiques différents, sur le même canal physique. Ces techniques utilisent des codes pseudo-aléatoires appelés le plus souvent codes PN (acronyme de l'anglais Pseudonoise). Les codes PN sont choisis sur des critères liés à leurs fonctions d'autocorrélation ou d'intercorrélation, afin qu'un récepteur ne décode que le signal qui lui est destiné, avec en outre un éventuel signal d'interférence dépendant du nombre d'utilisateurs et des propriétés des codes.

On peut notamment choisir:

- des familles de codes orthogonaux, par exemple des codes de Hadamard ou de Walsh; dans ce cas, on utilise alors pour chaque canal logique un code, qui est orthogonal à tous les autres;
- des codes à fonction d'intercorrélation bornée, comme par exemple les codes de Gold; le niveau du signal d'interférence mentionné plus haut dépend alors des codes retenus et de leur longueur;
- un même code pour tous les utilisateurs, dans le cas par exemple de la famille des codes de longueur maximale; chaque émetteur doit mettre en oeuvre une phase spécifique du code, différente des autres phases utilisées. On utilise dans ce cas les propriétés d'autocorrélation du code, pour détecter un pic de corrélation lorsque les codes sont superposés, la corrélation étant minimale dans les autres circonstances.

Pour plus de détails sur de telles techniques, on pourra consulter les ouvrages de J. H. Holmes, Coherent Spread Spectrum Systems, ou de Kamilo Feher, Wireless Digital Communications (Modulation and Spread Spectrum Applications).

L'invention propose une solution au problème de la couverture antenne des satellites; elle propose une solution permettant d'obtenir une couverture antenne complète des satellites, sans impliquer de duplication des émetteurs ou des récepteurs.

Plus précisément, l'invention propose un procédé de transmission de signaux CDMA vers un satellite présentant au moins deux antennes dont les diagrammes se superposent au moins partiellement, et des moyens de réception des signaux provenant des différentes antennes, comprenant:

- l'émission de signaux modulés par étalement de spectre;
- la réception des signaux par les antennes;
- la sommation des signaux reçus par les antennes, l'un au moins des signaux reçus étant retardé de sorte que la différence entre les temps de trajet des signaux sommés soit d'au moins une bribe de la modulation par étalement de spectre;
- la démodulation des signaux sommés.

Elle propose aussi un procédé de transmission de signaux CDMA depuis un satellite présentant au moins deux antennes dont les diagrammes se superposent au moins partiellement, et des moyens d'émission des signaux vers les différentes antennes, comprenant:

- la modulation des signaux à transmettre par étalement de spectre;
- la transmission des signaux modulés aux antennes,
- l'émission des signaux par les antennes,

les signaux émis par les antennes étant décalés d'au moins une bribe de la modulation par étalement de spectre.

Dans ce cas, l'étape de modulation comprend de préférence la modulation des signaux destinés auxdites antennes par des séquences d'étalement décalées d'au moins une bribe.

Avantageusement, l'étape de transmission comprend l'application d'un retard aux signaux destinés à l'une au moins des antennes.

L'invention propose encore un procédé de transmission de signaux depuis un satellite présentant au moins deux antennes dont les diagrammes se superposent au moins partiellement, et des moyens d'émission des signaux vers les différentes antennes, comprenant:

- la modulation des signaux à transmettre par étalement de spectre;
- la transmission des signaux modulés aux antennes,
- l'émission des signaux par les antennes, les signaux destinés aux différentes antennes étant modulés par étalement de spectre avec des séquences différentes.

L'invention propose aussi un satellite présentant au moins deux antennes dont les diagrammes se superposent au moins partiellement, et des moyens de réception de la somme des signaux provenant des différentes antennes, caractérisé en ce que les moyens de réception comprennent des moyens de démodulation d'un signal à spectre étalé, et en ce que la différence entre les temps de transmission respectifs d'un signal transmis vers les moyens de réception par deux antennes est supérieure en valeur absolue à une bribe de la modulation à étalement de spectre.

Avantageusement, les moyens de réception comprennent un coupleur des signaux provenant des antennes et au moins deux récepteurs reliés au coupleur.

De préférence, le satellite comprend des éléments de retard entre au moins une antenne et les moyens de réception.

Les éléments de retard comprennent avantageusement un élément choisi parmi une liaison coaxiale, une ligne à retard, un filtre à onde de surface.

L'invention propose encore un satellite présentant au moins deux antennes dont les diagrammes se superposent au moins partiellement, et des moyens d'émission de signaux CDMA vers les différentes antennes, caractérisé en ce que les moyens d'émission comprennent des moyens de modulation du signal à transmettre par étalement de spectre, et en ce que la différence entre les temps de transmission respectifs d'un signal transmis par les moyens d'émission par deux antennes est supérieure en valeur absolue à une bribe de la modulation à étalement de spectre.

L'invention propose enfin un satellite présentant au moins deux dont les diagrammes se superposent au moins partiellement, et des moyens d'émission de signaux CDMA vers les différentes antennes, caractérisé en ce que les moyens d'émission comprennent des moyens de modulation du signal à transmettre par étalement de spectre, les signaux destinés aux différentes antennes étant modulés par étalement de spectre avec des séquences différentes.

De préférence, les moyens d'émission comprennent au moins deux émetteurs en redondance froide et un coupleur pour envoyer les signaux provenant des émetteurs vers les antennes.

Dans un mode de réalisation, le satellite comprend des éléments de retard entre les moyens d'émission et au moins une antenne.

Ces éléments de retard peuvent comprendre un élément choisi parmi une liaison coaxiale, une ligne à retard, un filtre à onde de surface.

D'autres caractéristiques et avantages de l'invention apparaîtront à la lecture de la description qui suit de modes de réalisation de l'invention, donnée à titre d'exemple uniquement, et en référence aux figures annexées qui montrent :

- figure 1, un schéma d'un satellite connu;
- figure 2, un schéma d'un autre satellite connu;
- figure 3, un schéma d'un satellite mettant en oeuvre l'invention.

L'invention propose, pour assurer une couverture antenne dans les zones de recouvrement des diagrammes des antennes, d'utiliser une modulation à étalement de spectre, et de disposer ou câbler les antennes de sorte que la différence entre les temps de transmission des signaux via deux antennes soit supérieur à une bribe de la modulation à étalement de spectre. Elle s'applique aussi bien en réception qu'en émission, et permet d'éviter ou du moins de limiter les problèmes liés aux multitrajets.

Dans un autre mode de réalisation et notamment dans le cas de la télémesure, l'invention propose, pour limiter ou éviter les problèmes dans la zone de recouvrement des antennes, d'utiliser des séquences d'étalement différentes pour les différentes antennes.

En réception, on assure que les moyens de réception, s'ils s'accrochent sur un signal transmis par une antenne, ignorent les signaux transmis par une autre antenne, dans la mesure où ces signaux sont décalés de plus d'une bribe, ou sont étalés par une autre séquence.

En émission, on assure que les signaux émis dans la zone de recouvrement des antennes sont suffisamment décalés pour ne pas ou peu interférer.

La figure 3 montre un satellite selon l'invention. Comme le satellite de l'art antérieur, le satellite de la figure 3 comprend une antenne omnidirectionnelle terre 3, et une antenne omnidirectionnelle anti-terre 5 disposées dos à dos de part et d'autre du satellite. Les deux antennes sont reliées à des moyens de réception 45. Ces moyens de réception peuvent comprendre un coupleur 47, qui permet d'additionner les signaux des antennes, et qui transmet les signaux additionnés à l'un ou l'autre de deux récepteurs 49 et 51 en redondance froide. Les récepteurs présentent des moyens de démodulation d'un signal à spectre étalé par séquence directe.

Selon l'invention, on dispose les antennes et les moyens de réception de sorte à assurer que la différence entre les temps de transmission des signaux reçus depuis la station terrestre via l'une antenne et l'autre antenne soit supérieure à une bribe de la modulation à étalement de spectre. Ceci peut s'effectuer de diverses façons. D'une part, on peut tenir compte de la longueur de la liaison entre les antennes et les récepteurs (respectivement les émetteurs), qui sont disposées de part et d'autre du satellite; cette longueur peut, à elle seule, induire une différence entre les trajets terre et anti-terre; cette différence peut être supérieure à une bribe, et à elle seule assurer une différence suffisante entre les temps de transmission. Ainsi, une différence de distance de 4 ou 5 m entre les trajets-antennes, qui induit une différence correspondante entre les trajets terre et anti-terre, est suffisante pour un code à 60 mégabribe/seconde. La différence entre les temps de trajet est alors de l'ordre de 1 à 1,25 bribe.

Pour assurer une différence de trajet suffisante dans toutes les positions possibles du satellite par rapport à la station d'émission, on peut aussi prévoir des éléments de retard entre l'une ou l'autre des antennes et les moyens de réception; ces éléments de retard peuvent comprendre une longueur de liaison coaxiale supplémentaire 53, ou encore des éléments de retard actifs ou passifs, tels que des lignes à retard ou des filtres à ondes de surface. L'utilisation de ces derniers éléments peut alors rendre nécessaire des changements de fréquence avant de sommer les signaux provenant des antennes. Si nécessaire, on peut aussi prévoir un amplificateur à faible bruit 54 en amont des éléments de retard. L'insertion d'éléments de retard entre au moins l'une des antennes et les moyens de réception permet d'allonger la différence entre les trajets terre et anti-terre; on peut alors utiliser un rythme de bribe plus faible. Ainsi, l'insertion d'un élément de retard de 100 ns permet d'éliminer sensiblement le multitrajet avec un signal à spectre étalé supérieur à 10 Mbribe/s.

On donne dans la suite un exemple de calcul dans le cas de codes de longueur maximale. Pour ces codes, la fonction d'autocorrélation présente un pic lorsque les codes sont superposés, l'autocorrélation étant minimale lorsque les codes ne sont pas superposés.

A l'émission par la station sol, les données sont multipliées par un code PN; à la réception, la multiplication par un code PN synchrone permet de restituer les données. On utilise à la réception des moyens connus en soi pour assurer l'accrochage sur un signal reçu.

Le signal reçu par le satellite est un signal modulé par $D(t).PN(t)$; $D(t)$ est la séquence de données à transmettre, qui valent par exemple $\pm 1$, et $PN(t)$ est la séquence du code, qui prend aussi des valeurs $\pm 1$. Pour une modulation BPSK (acronyme de l'anglais binary phase shift keying, en français modulation par décalage de phase à deux états), donnée à titre d'exemple, le signal est proportionnel à :

$$D(t).PN(t).\cos(\omega_0.t + \theta_0),$$

avec $\omega_0$ la pulsation de la porteuse. On note dans la zone de recouvrement des diagrammes des antennes $T_1$ et $T_2$ les différences de trajet entre l'antenne terre et les moyens de réception, d'une part, et entre l'antenne anti-terre et les moyens de réception d'autre part. Pour les besoins de l'explication, on suppose que les antennes terre et anti-terre reçoivent en même temps les signaux. Le signal reçu par les moyens de réception via l'antenne terre est proportionnel à :

$$D(t - T_1).PN(t - T_1).\cos(\omega_0.(t - T_1) + \theta_0)$$

tandis que le signal reçu par les moyens de réception via l'antenne anti-terre est proportionnel à :

$$D(t - T_2).PN(t - T_2).\cos(\omega_0.(t - T_2) + \theta_0)$$

Les moyens de réception reçoivent la somme des deux signaux, et cherchent à s'accrocher sur l'un ou l'autre. Si les signaux sont de puissance comparable, le récepteur peut s'accrocher sur l'un ou l'autre des signaux. En supposant que les moyens de réception s'accrochent sur le signal terre, après démodulation, et multiplication par le code $PN(t - T_1)$, on obtient le signal $S(t)$ suivant:

$$S(t) = [D(t - T_1).PN(t - T_1) + D(t - T_2).PN(t - T_2)].PN(t - T_1)$$
$$= D(t - T_1) + D(t - T_2).PN(t - T_2).PN(t - T_1)$$

Si le temps $|T_2 - T_1|$ est supérieur à la durée d'une bribe de la séquence de bruit pseudo-aléatoire PN, et du fait des propriétés d'auto-corrélation de cette séquence, on aboutit après intégration sur la durée d'un symbole à :

$$S(t) = D(t - T_1) + I_0$$

avec $I_0$ un terme borné, qui peut être minimisé par un choix judicieux du code et du rythme bribe.

On obtient ainsi, en sortie des moyens de réception, et après démodulation du signal à spectre étalé, le signal transmis, sans que la sommation des signaux des antennes ne produise de problèmes liés à un trajets multiples. On peut ainsi continuer à utiliser un récepteur unique, ou deux récepteurs en redondance chaude, et assurer une réception correcte des signaux aussi dans la zone de recouvrement des diagrammes des antennes. Par rapport à une utilisation classique d'une technique d'étalement de spectre pour la transmission de différents canaux, l'invention utilise l'étalement de spectre pour la transmission du même signal; ceci permet d'éviter ou limiter les problèmes liés aux trajets multiples, et au recouvrement des diagrammes de réception des antennes.

L'invention a été décrite en détail dans le cas de la réception. Elle s'applique aussi à l'émission par le satellite, suivant les mêmes principes. On prévoit alors par exemple deux émetteurs 55 et 56 en redondance froide, qui fournissent un signal à spectre étalé par séquence directe; un coupleur 57 envoie le signal fournis par l'un ou l'autre des émetteurs aux deux antennes. On prévoit des éléments de retard 58 entre le coupleur et l'une des antennes, de sorte que la différence de trajet terre et anti-terre soit supérieure à une bribe quelle que soit la position de la station de réception terrestre dans la zone de recouvrement des diagrammes d'émission des antennes.

Dans ce cas, on assure que si la station terrestre de réception des signaux se trouve dans la zone de recouvrement de deux antennes du satellite, elle reçoive des signaux qui sont décalés de plus d'une bribe de la modulation par étalement de spectre. De la sorte, la station terrestre s'accroche sur un des signaux, et ignore l'autre.

D'autres solutions sont possibles. On pourrait ainsi au lieu de retarder l'un des signaux après l'étalement, comme expliqué ci-dessus, procéder à l'étalement des signaux destinés aux antennes dans deux dispositifs d'étalement distincts. Chacun des dispositifs d'étalement peut employer un même code PN, le code d'un des dispositifs étant décalé par rapport au code de l'autre dispositif.

On pourrait aussi utiliser dans chacun des dispositifs d'étalement des codes distincts; dans ce cas, les signaux émis par les deux antennes sont étalés avec des codes orthogonaux, ou présentant une fonction d'intercorrélation bornée. Le récepteur, même s'il se trouve dans la zone de recouvrement des antennes, peut s'accrocher sur le signal de l'une des antennes, sans que le signal de l'autre antenne ne pose un problème de réception.

Dans tous les cas, les mêmes signaux sont transmis par les antennes, soit avec un décalage supérieur à une bride de la modulation par étalement de spectre, soit sur des séquences d'étalement différentes. On évite, ou à tout le moins on limite les problèmes en réception dans la zone de recouvrement des diagrammes des antennes .

Dans le cas de la réception comme de l'émission, on assure que dans la zone de recouvrement des diagrammes des antennes, les différences de phase entre les signaux ne nuisent pas à la qualité de la réception; il faut noter que l'invention permet d'utiliser un récepteur unique recevant la somme des signaux des antennes, sans qu'il soit nécessaire de sélectionner le signal reçu. Ainsi, si le satellite s'accroche sur le signal anti-terre dans la zone de recouvrement des diagrammes des antennes, et que la puissance de ce signal diminue car le satellite présente l'antenne terre vers la station d'émission, les moyens de réception vont perdre le signal anti-terre sur lequel ils sont accrochés, et ensuite se raccrocher sur le signal terre. Ceci s'effectue sans qu'il ne soit nécessaire de le prévoir. L'invention permet ainsi une réception ou une émission dans toutes les phases, sans nécessité de connaître la position du satellite.

Bien entendu, la présente invention n'est pas limitée aux exemples et modes de réalisation décrits et représentés, mais elle est susceptible de nombreuses variantes accessibles à l'homme de l'art. Ainsi, l'invention a été décrite en référence aux figures, dans le cas le plus simple de deux antennes terre et anti-terre. Elle s'applique aussi dans les cas d'antennes multiples, qui présentent des diagrammes se recouvrant, deux à deux, par groupes de trois ou plus, ou tous ensemble. Dans une telle configuration, il suffit d'assurer que la différence de trajet entre deux signaux reçus dans la zone de recouvrement est supérieure à une bribe. En outre, l'invention a été décrite pour une modulation BPSK; elle s'applique à tout autre type de modulation.

Elle s'applique non seulement à la technique d'étalement par séquence directe donnée à titre d'exemple, mais aussi à d'autres techniques d'étalement de spectre.

L'invention est particulièrement avantageuse à mettre en oeuvre sur la liaison TTC ou TRC d'un satellite, du fait de l'importance du maintien de cette liaison. Elle peut aussi s'appliquer à des liaisons d'un autre type.

Dans la description, le décalage entre les signaux des antennes est d'au moins une bribe. En fait, le décalage dépend de l'étalement utilisé, et peut être supérieur à cette valeur, en fonction de l'autocorrélation de la séquence d'étalement utilisée, ou de l'intercorrélation entre les séquences utilisées.

## Revendications

1. Procédé de transmission de signaux CDMA vers un satellite présentant au moins deux antennes (3, 5) dont les diagrammes se superposent au moins partiellement, et des moyens de réception (45; 47, 49, 51) des signaux provenant des différentes antennes, comprenant:

   - l'émission de signaux modulés par étalement de spectre;
   - la réception des signaux par les antennes (3, 5);
   - la sommation des signaux reçus par les antennes, - la démodulation des signaux sommés,

   **caractérisé en ce que** l'un au moins des signaux reçus avant sommation est retardé de sorte que la différence entre les temps de trajet des signaux sommés soit d'au moins une bribe de la modulation par étalement de spectre.

2. Procédé de transmission de signaux CDMA depuis un satellite présentant au moins deux antennes (3, 5) dont les diagrammes se superposent superposent au moins partiellement, et des moyens d'émission (55, 56) des signaux vers les différentes antennes, comprenant:

   - la modulation des signaux à transmettre par étalement de spectre;
   - la transmission des signaux modulés aux antennes,
   - l'émission des signaux par les antennes,

   **caractérisé en ce que** les signaux émis par les antennes sont décalés d'au moins une bribe de la modulation par étalement de spectre.

3. Le procédé selon la revendication 2, **caractérisé en ce que** l'étape de modulation comprend la modulation des signaux destinés auxdites antennes par des séquences d'étalement décalées d'au moins une bribe.

4. Le procédé selon la revendication 2 ou 3, **caractérisé en ce que** l'étape de transmission comprend l'application d'un retard aux signaux destinés à l'une au moins des antennes.

5. Procédé de transmission de signaux CDMA depuis un satellite présentant au moins deux antennes (3, 5) dont les diagrammes se superposent au moins partiellement, et des moyens d'émission (55, 56) des signaux vers les différentes antennes, comprenant:

   - la modulation des signaux à transmettre par étalement de spectre;
   - la transmission des signaux modulés aux antennes,
   - l'émission des signaux par les antennes,

   **caractérise en ce que** les signaux destinés aux différentes antennes sont modulés par étalement de spectre avec des séquences différentes.

6. Un satellite présentant au moins deux antennes (3, 5) dont les diagrammes se superposent au moins partiellement, et des moyens de réception (45; 47, 49, 51) de la somme des signaux CDMA provenant des différentes antennes, **caractérisé en ce que** les moyens de réception comprennent des moyens de démodulation d'un signal à spectre étalé, et **en ce que** la différence entre les temps de transmission respectifs d'un signal transmis vers les moyens de réception par deux antennes est supérieure en valeur absolue à une bribe de la modulation à étalement de spectre.

7. Le satellite selon la revendication 6, **caractérisé en ce que** les moyens de réception comprennent un coupleur (47) des signaux provenant des antennes et au moins deux récepteurs (49, 51) reliés au coupleur.

8. Le satellite selon la revendication 6 ou 7, **caractérisé en ce qu'**il comprend des éléments de retard (53) entre au moins une antenne et les moyens de réception.

9. Le satellite selon la revendication 8, **caractérisé en ce que** les éléments de retard comprennent un élément choisi parmi une liaison coaxiale, une ligne à retard, un filtre à onde de surface.

10. Un satellite présentant au moins deux antennes (3, 5) dont les diagrammes se superposent au moins partiellement, et des moyens d'émission (55, 56, 57) de signaux CDMA vers les différentes antennes, **caractérisé en ce que** les moyens d'émission comprennent des moyens de modulation du signal à transmettre par étalement de spectre, et **en ce que** la différence entre les temps de transmission respectifs d'un signal transmis par les moyens d'émission par deux antennes est supérieure en valeur absolue à une bribe de la modulation à étalement de spectre.

11. Un satellite présentant au moins deux antennes (3, 5) dont les diagrammes se superposent au moins partiellement, et des moyens d'émission (55, 56, 57) de signaux CDMA vers les différentes antennes, **caractérisé en ce que** les moyens d'émission comprennent des moyens de modulation du signal à transmettre par étalement de spectre, les signaux destinés aux différentes antennes étant modulés par étalement de spectre avec des séquences différentes.

12. Le satellite selon la revendication 10 ou 11, **caractérisé en ce que** les moyens d'émission comprennent au moins deux émetteurs (55, 56) en redondance froide et un coupleur (57) pour envoyer les signaux provenant des émetteurs vers les antennes.

13. Le satellite selon la revendication 10, 1 ou 12, **caractérisé en ce qu'**il comprend des éléments de retard entre les moyens d'émission et au moins une antenne.

14. Le satellite selon la revendication 13, **caractérisé en ce que** les éléments de retard comprennent un élément choisi parmi une liaison coaxiale, une ligne à retard, un filtre à onde de surface.

**Claims**

1. A method of transmitting CDMA signals to a satellite having at least two antennas (3, 5) whose radiation patterns overlap, at least in part and means (45; 47, 49, 51) for receiving signals from the various antennas, the method including the following steps:

   . transmitting spread spectrum mediated signals;
   . receiving the signals via the antennas (3, 5);

. summing the signals received via the antennas; and

. demodulating the summed signals;

the method being **characterized in that** at least one of the signals received before summing is delayed so that the path difference between the summed Signals is at least one chip of the spread spectrum modulation.

2. A method of transmitting CDMA signals from a satellite having at least two antennas (3, 5) whose radiation patterns overlap, at least in part and means (55, 56) for sending signals to the various antennas, the method including the following steps:

· spread spectrum mediating the signals to be transmitted;
· sending the modulated signals to the antennas; and
· transmitting the signals via the antennas;

the method being **characterized in that** the signals transmitted via the antennas are offset by at least one chip of the spread spectrum modulation.

3. The method according to claim 2, **characterized in that** the modulation step includes modulating the signals intended for said antennas using spreading sequences offset by at least one chip.

4. The method according to claim 2 or claim 3, **characterized in that** the sending step includes applying a time-delay to the signals intended for at least one of the antennas,

5. A method of transmitting CDMA signals from a satellite having at least two antennas (3, 5) whose radiation patterns overlap, at least in part and means (55, 56) for sending signals to the various antennas, the method including the following steps;

· spread spectrum modulating the signals to be transmitted;
· sending the modulated signals to the antennas; and
· transmitting the signals via the antennas;

the method being **characterized in that** the signals intended for the various antennas are spread spectrum modulated using different sequences.

6. A satellite having at least two antennas (3, 5) whose radiation patterns overlap, at least in part and means (45; 47,49, 51) for receding the sum of the CDMA signals from the various antennas, the satellite being **characterized in that** the receiver means include means for demodulating a spread spectrum signal and **in that** the absolute difference between the respective transmission times of signals transmitted to the receiver means via two antennas is greater than one chip of the spread spectrum modulation,

7. The satellite according to claim 6, **characterized in that** the receiver means include a coupler (47) for signals from the antennas and at least two receivers (49, 51) connected to the coupler.

8. The satellite according to claim 6 or claim 7, **characterized in that** it includes time-delay units (53) between at least one antenna and the receiver means.

9. The satellite according to claim 8, **characterized in that** the time-delay units include a coaxial connection, a delay line or a surface acoustic wave filter.

10. A satellite having at least two antennas (3, 5) whose radiation patterns overlap, at least in part and means (55, 56, 57) for sending CDMA signals to the antennas, **characterized in that** the sending means include means for spread spectrum modulating the signal to be transmitted and **in that** the absolute difference between the respective transmission times of signals transmitted by the transmitter means via two antennas is greater than one chip of the spread spectrum modulation.

11. A satellite having at least two antennas (3, 5) whose radiation patterns overlap, at least in part and means (55, 56, 57) for sending CDMA signals to the various antennas, the satellite being **characterized in that** the sending means include means for spread spectrum modulating the signals intended for the various antennas using different sequences.

**12.** The satellite according to claim 10 or claim 1, **characterized in that** the transmitter means include at least two transmitters (55, 56) in a cold redundancy configuration and a coupler (57) for sending the signals from the transmitters to the antennas.

**13.** The satellite according to claim 10 or claim 11 or claim 12, **characterized in that** it includes time-delay units between the transmitter means and at least one antenna.

**14.** The satellite according to claim 13, **characterized in that** the time-delay units include a coaxial connection, a delay line or a surface acoustic wave filter,

**Patentansprüche**

**1.** Verfahren zur Übertragung von CDMA-Signalen an einen Satelliten, der mindestens zwei Antennen (3, 5) aufweist, deren Diagramme sich zumindest teilweise überlagern, und Mittel zum Empfangen (45, 47, 49, 51) der Signale, die von den verschiedenen Antennen kommen, beinhaltend:

- das Senden von durch Spektrumsspreizung modulierten Signalen;
- das Empfangen der Signale durch die Antennen (3, 5);
- die Summierung der durch die Antennen empfangenen Signale, die Demodulation der summierten Signale,

**dadurch gekennzeichnet, dass** mindestens eines der empfangenen Signale vor der Summierung verzögert wird, so dass der Unterschied zwischen den Wegezeiten der summierten Signale mindestens ein "bribe" der Modulation durch Spektrumsspreizung ist.

**2.** Verfahren zur Übertragung von CDMA-Signalen von einem Satelliten aus, der mindestens zwei Antennen (3, 5) aufweist, deren Diagramme sich zumindest teilweise überlagern, und Mittel zum Senden (55, 56) der Signale an die verschiedenen Antennen, beinhaltend:

- die Modulation der Signale, die übertragen werden sollen, durch Spektrumsspreizung;
- die Übertragung der modulierten Signale an die Antennen,
- dos Senden der Signale durch die Antennen,

**dadurch gekennzeichnet, dass** die durch die Antennen gesendeten Signale um mindestens ein "bribe" von der Modulation per Spektrumsspreizung versetzt sind.

**3.** Verfahren gemäß Anspruch 2, **dadurch gekennzeichnet, dass** der Modulationsschritt die Modulation der für diese Antennen bestimmten Signale durch um mindestens ein "bribe" versetzte Spreizungssequenzen beinhaltet.

**4.** Verfahren gemäß Anspruch 2 oder 3, **dadurch gekennzeichnet, dass** der Übertragungsschritt die Anwendung einer Verzögerung auf die Signale beinhaltet, die für mindestens eine der Antennen bestimmt sind.

**5.** Verfahren zum Übertragen von CDMA-Signalen von einem Satelliten aus, der mindestens zwei Antennen (3, 5) aufweist, deren Diagramme sich zumindest teilweise Überlagern, und Mittel zum Senden (55, 56) von Signalen an die verschiedenen Antennen, beinhaltend:

- die Modulation der zu übertragenden Signale per Spektrumsspreizung,
- die Übertragung der modulierten Signale an die Antennen,
- das Senden der Signale durch die Antennen,

**dadurch gekennzeichnet, dass** die für die verschiedenen Antennen bestimmten Signale durch Spektrumsspreizung mit unterschiedlichen Sequenzen moduliert werden.

**6.** Satellit, der mindestens zwei Antennen (3, 5) aufweist, deren Diagramme sich zumindest teilweise überlagern, und Mittel zum Empfangen (45; 47, 49, 51) der Summe der CDMA-Signale, die von den verschiedenen Antennen herkommen, **dadurch gekennzeichnet dass** die Mittel zum Empfangen Mittel zur Demodulation eines Signals mit gespreiztem Spektrum beinhalten, und **dadurch**, dass die Differenz zwischen den jeweiligen Ubertragungszeiten eines durch zwei Antennen an Empfangsmittel übertragenen Signals in absoluten Werten größer ist als ein "bribe" der Modulation mit Spektrumsspreizung.

7.  Satellit gemäß Anspruch 6, **dadurch gekennzeichnet, dass** die Mittel zum Empfang einen Koppler (47) der Signale, die von den Antennen kommen und mindestens zwei mit dem Koppler verbundene Empfänger (49, 51) beinhalten,

8.  Satellit gemäß Anspruch 6 oder 7, **dadurch gekennzeichnet dass** er Elemente zur Verzögerung (53) zwischen mindestens einer Antenne und den Mitteln zum Empfang beinhaltet.

9.  Satellit gemäß Anspruch 8, **dadurch gekennzeichnet, dass** die Verzögerungselemente ein Element beinhalten, das ausgewählt wurde zwischen einer Koaxialverbindung, einer Verzögerungsleitung oder einem Oberflächenwellenfilter.

10. Satellit, der mindestens zwei Antennen (3, 5) aufweist, deren Diagramme sich zumindest teilweise uberlagern, und Mittel zum Senden (55, 56, 57) von CDMA-Signalen an die verschiedenen Antennen, **dadurch gekennzeichnet, dass** die Mittel zum Senden, Mittel zur Modulation des zu übertragenden Signals durch Spektrumsspreizung beinhalten, und **dadurch**, dass der Unterschied zwischen den jeweiligen Übertragungszeiten eines durch die Sendemittel durch zwei Antennen übertragenen Signals in absoluten Werten größer ist als ein "bribe" der Modubtion mit Spektrumsspreizung.

11. Satellit, der mindestens zwei Antennen (3, 5) aufweist, deren Diagramme sich zumindest teilweise überlagern, und Mittel zum Senden (55, 56, 57) von CDMA-Signalen an die verschiedenen Antennen, **dadurch gekennzeichnet, dass** die Mittel zum Senden, Mittel zur Modulation des zu übertragenden Signals durch Spektrumsspreizung beinhalten, wobei die für die verschiedenen Antennen bestimmten Signale durch Spektrumsspreizung mit verschiedenen Sequenzen moduliert sind.

12. Satellit gemäß Anspruch 10 oder 11, **dadurch gekennzeichnet, dass** die Mittel zum Senden mindestens zwei Sender (55, 56) in kalter Redundanz beinhalten und einen Koppler (57), um die von den Sendern kommenden Signale on die Antennen zu schicken.

13. Satallit gemäß Anspruch 10, 11 oder 12, **dadurch gekennzeichnet, dass** er Elemente zur Verzögerung zwischen den Mitteln zum Senden und mindestens einer Antenne beinhaltet.

14. Satellit gemäß Anspruch 13, **dadurch gekennzeichnet, dass** die Verzögerungselemente ein Element beinhalten, das ausgewählt wurde zwischen einer Koaxialverbindung, einer Verzögerungsleitung, einem Oberflächenwellenfliter.

FIG_1

FIG_2

FIG_3